# EUROPEAN PATENT SPECIFICATION

(11) **EP 1 393 986 B1**
(45) Date of publication and mention of the grant of the patent: **04.10.2006**
(21) Application number: 02733278.2
(22) Date of filing: 04.06.2002
(51) Int. Cl.: B60R 19/04, B21D 7/03, B21D 7/06, B21D 53/08

(54) **BUMPER REINFORCEMENT FOR VEHICLE BODY AND METHOD AND DEVICE FOR PRESSINGLY BENDFORMING BUMPER REINFORCEMENT**
STOSSFÄNGERVERSTÄRKUNG FÜR FAHRZEUGAUFBAU UND VERFAHREN UND VORRICHTUNG ZUM DRUCKBIEGEFORMEN EINER STOSSFÄNGERVERSTÄRKUNG
RENFORCEMENT DE PARE-CHOCS DE VEHICULE, PROCEDE ET DISPOSITIF SERVANT A CREER CE RENFORCEMENT PAR CINTRAGE ET PRESSION

(30) Priority: 08.06.2001 JP 2001173427
(43) Date of publication of application: 03.03.2004
(73) Proprietor: Unipres Corporation, Fuji-shi, Shizuoka 416-8510 (JP)
(72) Inventor: KOZUMA, Hideo, Zama-shi, Kanagawa 228-0014 (JP); SANO, Takuo, Fujikawa-cho, Ihara-gun, Shizuoka 421-33 (JP); SAKAKIBARA, Chihiro, Fujinomiya-shi, Shizuoka 418-0013 (JP)
(74) Representative: Palmer, Jonathan R.
(86) International application number: PCT/JP2002/005469
(87) International publication number: WO 2002/100688

(56) References cited:
- JP-A- 10 180 360
- JP-A- 10 236 248
- PATENT ABSTRACTS OF JAPAN vol. 1998, no. 14, 31 December 1998 (1998-12-31) -& JP 10 236248 A (UNIE PRESS KK), 8 September 1998 (1998-09-08)
- PATENT ABSTRACTS OF JAPAN vol. 1998, no. 12, 31 October 1998 (1998-10-31) -& JP 10 180360 A (YUNIPURESU KK), 7 July 1998 (1998-07-07)
- PATENT ABSTRACTS OF JAPAN vol. 1995, no. 06, 31 July 1995 (1995-07-31) -& JP 07 060364 A (TOYOTA AUTOM LOOM WORKS LTD; OTHERS: 01), 7 March 1995 (1995-03-07)
- PATENT ABSTRACTS OF JAPAN vol. 1995, no. 06, 31 July 1995 (1995-07-31) -& JP 07 060365 A (TOYOTA AUTOM LOOM WORKS LTD; OTHERS: 01), 7 March 1995 (1995-03-07)

## Description

### TECHNICAL FIELD

The present invention relates to a bumper reinforce made of a metal pipe of a rectangular cross sectional shape and arranged along the width of a body of a vehicle and to a method and an apparatus for shaping under a press bending.

### BACKGROUND TECHNOLOGY

In a vehicle such as an automobile, a bumper fascia made of a plastic material is arranged at an end (front or rear end) of the vehicle and is connected to a bumper reinforce. The bumper reinforce is made of a metal pipe such as a steel pipe of a rectangular cross sectional shape and is arranged between bumper stays, which extend forwardly or rearwardly from a pair of side members as the structural elements of the body of the vehicle. An impact applied to the bumper fascia when a collision is occurred is transmitted to the side members via the bumper reinforce and the bumper stays. The impact, the degree of which is light, is absorbed by the bumper reinforce and the bumper stays, so that the side members as the structural elements of the vehicle body are prevented from being subjected to a permanent deformation. Namely, as far as a collision, the degree of which is light, is concerned, a replacement of the bumper reinforce and the bumper stay is only required, and, therefore, the side members are prevented from any influence as generated by the collision.

The bumper reinforce is arranged inside of the bumper fascia. Therefore, in the design of the bumper fascia, which is bent at ends in the direction of the width of the vehicle, the bumper fascia also has ends, which are correspondingly bent at ends. The degree of the bent angle is dependent from the design of the bumper fascia and it is not uncommon that the bent angle exceeds 10 degree.

A known method for bending the bumper fascia at its ends is, the most simply, the one that is relied on a press bending apparatus. In the known method relied on the press bending, a blank steel pipe of a rectangular cross sectional shape is rested astride a lower die having a shape corresponding to the bent shape of the bumper reinforce. Then, an upper die having a tip end of a pointed wedge shaped is arranged above the lower die, while arranging the steel pipe of the rectangular cross-sectional shape between the upper and the lower dies. The upper die is, then, moved toward the lower die, so that the tip end of the wedge shape of the upper die is contacted with an upper side surface of the steel pipe of the rectangular cross-sectional shape. As a result, a bending of the steel pipe of the rectangular cross-sectional shape is occurred about the location of said contact.

In place of bending by the press bending apparatus, a bending by a pipe bender is known. In such a pipe bender, a pipe of a rectangular cross-sectional shape is held by a plurality of rolls for carrying out a bending of the pipe.

In case of bending by the press die, the pipe is subjected to a compression at the side thereof contacting with the press die, so that, at the compressed side of the pipe, a surplus of the metal is generated. An amount of a surplus of the metal generated in a portion of the pipe subjected to a compression under the bending is, quite naturally, increased in accordance with the increase in a degree of the bending angle. The surplus of the metal at the side of the pipe subjected to the compression is flown to a recessed portion created when an engagement of the press die is occurred. However, the press die in the prior art has a limited area for receiving the surplus flow of the metal. Therefore, when the degree of the bending is increased to a value larger than 10 degree, no room is left for the flow of the surplus metal, thereby generating wrinkles, which causes the product to be rejected

JP 10236248 discloses a bumper beam, a press sending method and a press sending apparatus according to the preambles of claims 1, 4 and 6.

In the pipe bender, a deep bending of an angle larger than 10 is possible without generating wrinkle. However, in comparison with the bending by the press, the bending by the pipe bender is defective in its increased cost.

The present invention is made in view of the above mentioned drawback and aims to make it possible that a deep bending of an angle exceeding 10 degree is possible without generating wrinkle.

### DISCLOSURE OF THE INVENTION

According to the present invention, a bumper reinforce is provided for a vehicle body made of a metal pipe of a rectangular cross-sectional shape and arranged at an end of the vehicle body in a direction of a width of the body, wherein said bumper reinforce is formed with bent portions and said bumper reinforce is, on its side subjected to a compression as caused by a bending, formed with recesses having a height h occupying substantial area of the height of the bumper reinforce while leaving portions of the wall thickness at its upper and lower edges to be freed from the recess, characterized in that each recess is elongated in the length of the bumper reinforce in such a manner that the length a of the recess is longer than the vertical height L1 of the bumper reinforce.

When the bumper reinforce is bent, a surplus of material is occurred at the side of the bumper reinforce, which is subjected to a compression. According to the present invention, the bumper reinforce is provided with a longitudinally elongated recess at the compressed side of the bumper reinforce, which causes the surplus of the metal as generated on the compressed side to be entirely flown to the recess even in a case where the bending is done under an angle larger than 10 degree, thereby preventing any wrinkle from being occurred, resulting in a neat shape of edges at the top and bottom of the bumper reinforce.

A wrinkle is generated due to the fact the surplus of the surplus metal at the compressed side is overlapped in the direction of the height. Due to the arrangement of the length a of the recess larger then the vertical height L1, the surplus of the metal on the compressed side as generated by the bending can be completely flown to the recess. Thus, any occurrence of the wrinkle can be prevented even when a bending is done at an angle larger than 10 degree.

The recess may be formed such that located nearer the center, deeper the recess. Due to the shape of the deeper recess when located nearer the center, a condition is obtained that the material can be flown smoothly on the side, which is subjected to the compression. As a result, an increased degree of bending is obtained without generating a wrinkle.

When the maximum depth of the recess is d and the width of the bumper reinforce in the vehicle length wise direction is L2, it is preferable that a relationship of d>(1/3)×L2 is obtained. By maintaining the relationship of d>(1/3)×L2 when d is the maximum depth of the recess and L2 is the width of the bumper reinforce in the vehicle length wise direction, an increased value of the bending angle is realized. The inventors have affirmed this effect by a model test based on a finite-element method.

According to the present invention, a press bending method is provided, in which a metal pipe of a rectangular cross sectional shape is subjected to a bending for obtaining a bumper reinforce, wherein the metal pipe is supported at its ends, a presser member of a cross sectional shape having a height h' almost corresponding to but smaller than the vertical height L1 of the metal pipe for at least twice of the wall thickness t of the metal pipe is arranged so that the presser member is faced with the metal pipe, and the presser member and the metal pipe are relatively moved in the direction toward each other in a manner that the presser member is, at its tip end, penetrated into the opposed surface of the metal pipe, so that a recessed portion is created on one hand and, on the other hand, the metal pipe is subjected to a bending at a location of the metal pipe where the penetration of the presser member to the metal pipe is occurred, the arrangement being such that a surplus of material generated on the side of the metal pipe subjected to the compression during the bending is flown into the recessed portion, thereby obtaining an increased bent angle of the bumper reinforce without generating any wrinkle, characterized in that the length a' (>h') of the cross sectional shape of the presser member is larger than the vertical height L1 of the metal pipe and the cross sectional shape of the presser member is elongated in the direction of the length of the metal pipe. According to this method, when a bending of a metal pipe for obtaining a bumper reinforce is done, the presser member is, at its bottom end, penetrated into the faced surface of the metal pipe, thereby creating a recess. The bending of the rectangular cross-sectioned pipe is progressed about said penetrated portion, so that a bending angle corresponding to the shaping surface of the bottom die can be finally obtained. Since the presser member has a cross-sectional shape, which is elongated in the longitudinal direction of the metal pipe, the recess created by the presser member penetrated into the faced side surface of the metal pipe is also elongated in the longitudinal direction of the metal pipe. Thus, the surplus of the metal generated on the side of the metal pipe subjected to the compression can be entirely flown into the recessed portion. As a result, a bending operation without generating any wrinkle (buckling) is realized even in an increased bending angle in a range 10 to 20 degrees.

When a bending of an angle larger than 10 degree is done, the surplus amount of material, which is to be flown to the recessed portion in order to prevent a wrinkle from being generated, corresponds to the amount of the material, which is needed when a recessed portion of the length of L1 and the depth of (1/3) ×L2 is to be created on the pipe. According to the present invention, since the presser member has, at its transverse cross-section, a length of a', which is equal to or larger than the length L1 of the pipe, it is possible that the surplus of metal as generated when the bending of the pipe is done is completely flown into the recessed portion.

According to the present invention, said presser member may be formed such that located nearer to the center in the longitudinal direction of the bumper reinforce, larger is the degree of the projection toward the metal pipe. Due to the employment of an arrangement of the presser member of an increased projected amount toward its center, a flowability of the material toward the recess is increased during the execution of the bending, resulting in an increased degree of the bending angle.

According to the present invention, a press bending apparatus is provided comprising a lower die having a shaping surface corresponding to a bent shape of a bumper reinforce which is, at its central part, straight shape and, at both ends, is bent and which is for supporting on the ends a metal pipe of a rectangular cross-sectional shape and includes an upper die arranged above the lower die and having a presser member extending toward the bent part of the lower die, while the metal pipe being arranged between the upper and lower dies, wherein the presser member has a cross sectional shape which has a height h' almost corresponding but smaller than the vertical height L1 of the metal pipe for at least twice of the wall thickness t of the metal pipe and has a side shape which is, at its central part, projected toward the metal pipe, characterized in that the length a' (>h') of the cross sectional shape of the presser member is larger than the vertical height L1 of the metal pipe and the cross sectional shape of the presser member is elongated in the longitudinal direction of the metal pipe.

Due to the movement in the directions where the upper and lower dies are combined, the presser member of the upper die is contacted with the upper surface of the metal pipe and is, partly, penetrated, so that a recess is formed, on one hand, and, on the other hand, a bending of the metal plate is proceeded, thereby forming, finally, a bending angle corresponding to the shaping surface of the lower die. Due to the fact that the presser member has a cross-sectional shape, which is elongated in the longitudinal direction of the metal plate, the recess as created by the penetration of the presser member to the side surface of the pipe is elongated in the longitudinal direction of the pipe. As a result, the surplus amount of metal as generated on the compressed side of the pipe subjected to the bending is completely flown into the recess, thereby realizing the bending processing without generating any wrinkle (buckling).

According to the present invention, the upper die may be provided with a pair of such presser members, which are spaced along the longitudinal direction of the metal plate. Due to the fact that the upper die is provided with a pair of presser members, a bumper reinforce bent at its both ends can be efficiently formed by a single stroke of the pressing operation is sufficient to obtain a bumper reinforce, which is bent at its both ends.

When a bending of an angle larger than 10 degree is done, the surplus amount of material, which is to be flown to the recessed portion while preventing an occurrence of a wrinkle, corresponds to the amount of the material, which is needed when a recessed portion of the length of L1 and the depth of (1/3) ×L2 is to be created on the pipe. A length a' of the presser member in the transverse cross-section, which is equal to or larger than the length L1 of the pipe, allows that the surplus of metal as generated when the bending of the pipe is done is completely flown into the recessed portion.

In the present invention, said presser member may be formed such that located nearer to the center in the longitudinal direction of the bumper reinforce, larger the degree of the projection toward the metal pipe. By the arrangement of the presser member toward the metal pipe having an increased degree of projection toward the central portion of the recess, a surplus amount of metal as generated during the bending process can be effectively flown toward the recessed portion, thereby allowing to obtain an increased bending angle.

### BRIEF EXPLANATION OF THE DRAWING

Fig. 1 is a schematic plan view of a front portion of a vehicle body provided with a bumper reinforce in a first embodiment of the present invention.
Fig. 2 is a perspective view of a bent portion of the bumper reinforce according to the present invention.
Fig. 3 is a transverse cross-sectional view of the bumper reinforce taken along lines III-III in Fig. 1.
Fig. 4 is a partial longitudinal cross-sectional view of the bumper reinforce taken along line IV-IV in Fig. 3.
Fig. 5a is a schematic view illustrating a first stage of a bending operation for obtaining a bumper reinforce from a rectangular pipe according to the present invention.
Fig. 5b is a schematic view illustrating a second stage of the bending operation for obtaining the bumper reinforce from the rectangular pipe according to the present invention.
Fig. 6 is a cross-sectional view taken along a line VI-VI in Fig. 5a and illustrating a relative position between an upper surface of the rectangular pipe and a presser member of a press machine.
Fig. 7 illustrates a side view of a presser member of a press machine in another embodiment according to the present invention.
Fig. 8 I a cross-sectional view of the presser member of the press machine in Fig. 7 (a cross-sectional view taken along a line VIII-VIII in Fig. 7).

### BEST EMBODIMENT FOR PRACTICING THE PRESENT INVENTION

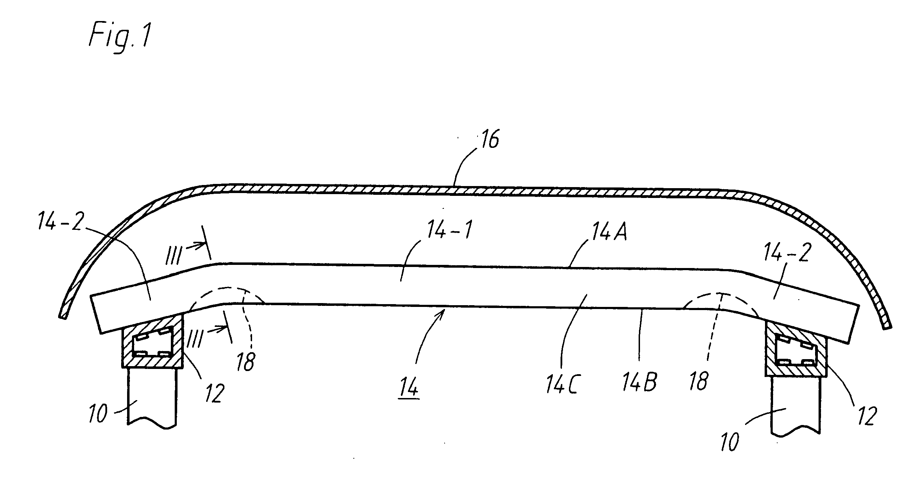

In Fig. 1 illustrating schematically a front portion of a body of an automobile, a reference numeral 10 denotes a side member as a bone structure of the body of an automobile. A pair of such side members 10 is arranged at both sides of the vehicle body. As well known, the side members 10 are made of a steel material.

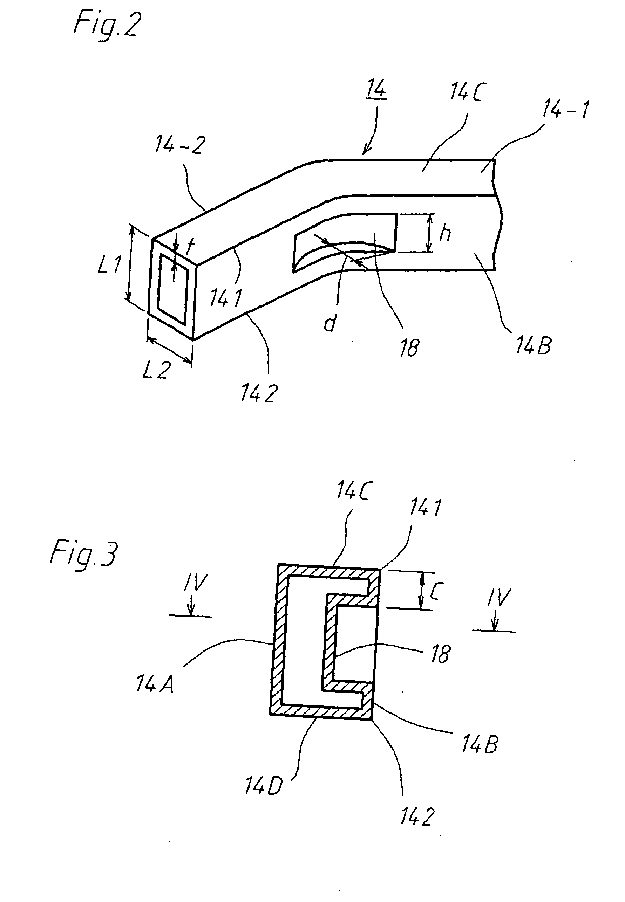

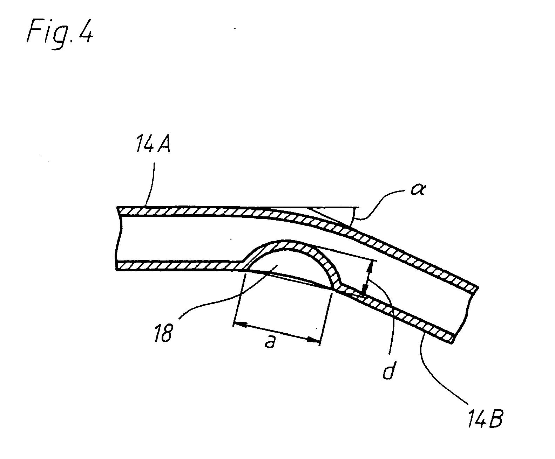

At front ends of the side members 10, bumper stays 12 are fixed by means of tightening members such as bolts (not shown) and a bumper reinforce 14 is arranged between the left-handed and right-handed bumper stays 12 and fixed thereto by means of tightening members such as bolts (not shown). The bumper reinforce 14 is formed with a straight central portion 14-1 and end portions 14-2, which are bent at an angle α with respect to the central portion 14-1 (see Fig. 4) . The present invention is suitable for a type of the bumper reinforce, wherein the bending of the end portions 14-2 with respect to the straight central portion 14-1 is done at a value of the angle α, which is larger than 10 degree. The bumper reinforce 14 has a rectangular cross-section (see Figs. 2 and 3) and is obtained by bending a rectangular cross-sectioned steel pipe under a press working. The bumper reinforce 14 of a rectangular cross-sectional shape is formed with a front surface 14A in the front side of the vehicle, a rear surface 14B in the rear side of the vehicle, an upper surface 14C and a lower surface 14D.

In Fig. 1, a reference numeral 16 denotes a bumper fascia which is made of a plastic material and which covers the bumper reinforce 14 from the front side of the vehicle. The bumper fascia 16 is, at its ends, curved shapes and the bumper reinforce 14 located inside the bumper fascia has the end portions 14-2, which are bent with respect to the strait center part 14-1 at the angle α, which conforms to the bent shape of the bumper fascia 16.

At the locations where the straight central portions 14-1 is connected to the end portions 14-2, the bumper reinforce 14 is formed with recesses 18 on its rear side 14B, i.e., the side of the bumper reinforce subjected to a compression as generated when the bending from the steel billet pipe is done. As shown in Fig. 2, the recess 18 is elongated in the longitudinal direction of the bumper reinforce 14 and has a cross-sectional shape having, at its central portion, an increased depth at its central portion while, at its end portion, being smoothly connected to the side surface 14B of the bumper reinforce (see Fig. 4.). From upper and lower ridges 141 and 142 of the rear surface 14B of the bumper reinforce, the recess 18 is spaced at a distance c (Fig. 3), which is, at least, larger than the wall thickness t of the bumper reinforce. In the bumper reinforce 14, the ridge 141 connects the rear surface 14B and the upper surface 14C, while the ridge 142 connects the rear surface 14B and the bottom surface 14D.

With respect to the vertical height L1 and width L2 in the front-to-back direction of the bumper reinforce 14, the width (height) h of the recess 18a must satisfy a relationship, that is h<L1-2×t. Marginal portions, which extend to the ridges 141 and 142, respectively are thus created. Furthermore, it is desirable that the depth d of the recess satisfies a relationship, that is d>L2×1/3. Furthermore, the length a of the recess has a value larger than the value of the height L1 of the rectangular pipe. The recess 18 has a horizontal cross-sectional shape of a partial circle of a radius R. It is preferable that the radius R satisfy a relationship, that is R>L1×1/2. By providing the recess keeping such a relationship as to the radius, a smooth flow of the surplus of metal is obtained during the execution of the bending, thereby obtaining an increased value of the bending angle.

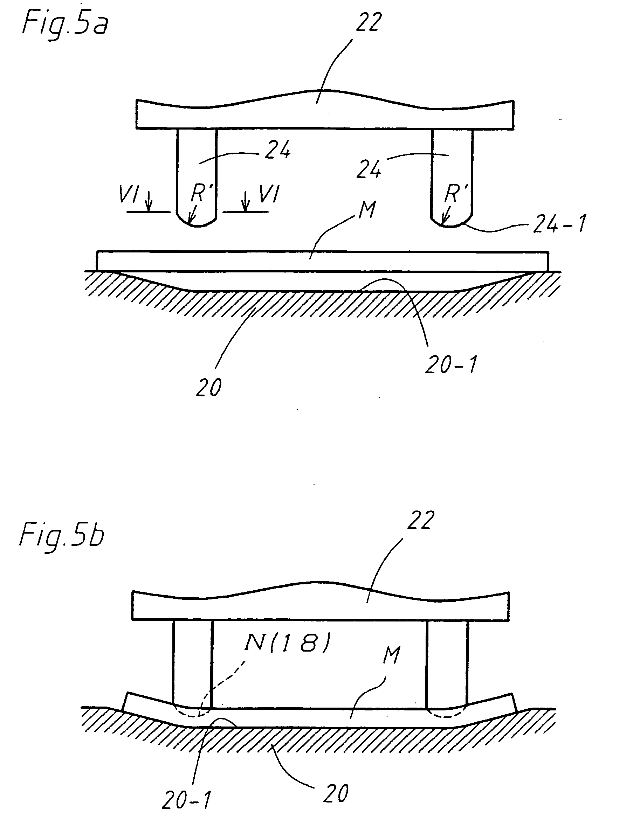

Fig. 5a illustrates schematically a press bending apparatus for producing a bumper reinforce 14 from a rectangular pipe by bending. The press bending apparatus includes a lower die 20 and an upper die 22.

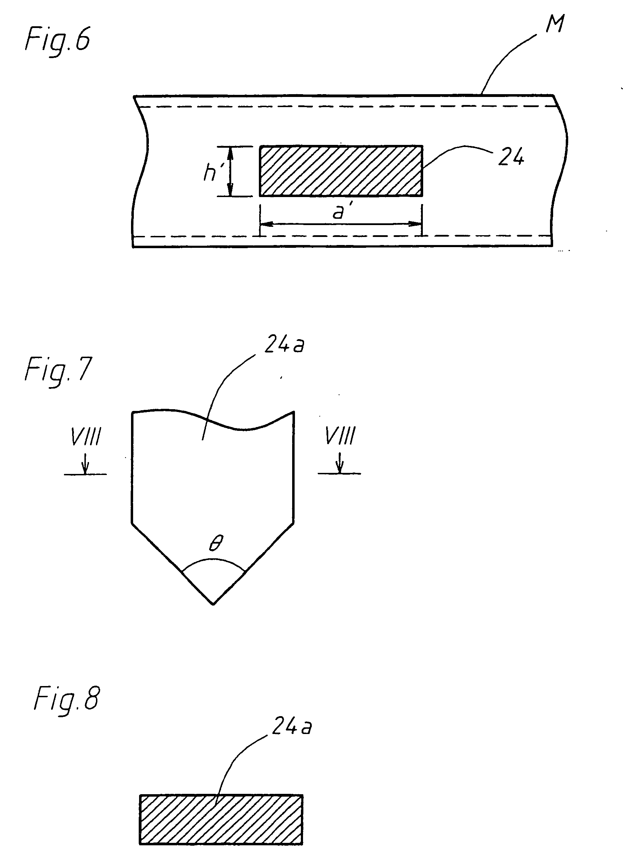

The lower die 20 is formed with a working surface 20-1, which corresponds to the bent shape of the bumper reinforce, which shape is constructed by a central straight portion and bent portions at the ends. A metal blank pipe M of a rectangular cross-sectional shape is rested on ends of the lower die 20 astride the working surface 20-1. The upper die 22 is provided with spaced apart presser member 24. The presser member 24 is formed with a rectangular cross-sectional shape, which is extended in the longitudinal direction of the metal blank pipe M. Namely, in the cross-sectional shape as shown in Fig. 6, the value of a length a' of the presser member 24 is considerably larger than the value of the width h'. The length a' corresponds to the length a (Fig. 4) of the recess 18 formed on the compressed side of the rectangular pipe, when a bending of the rectangular pipe by the presser member 24 is done. The width h' corresponds to the height h (Fig. 2) of the recess 18.

The presser member 24 has, at its bottom end 24-1, a rounded shape faced with the metal pipe M as shown in Fig. 5a. A radius of a curvature R' of the bottom end 24-1 of the presser member 24 corresponds to the inner radius R of the recess 18 of a shape of a partial circle, which is formed when the bottom end 24-1 of the presser member 24 is engaged with the metal pipe during the execution of the bending operation of the metal pipe M.

In order to execute the bending of the bumper reinforce, a metal pipe M is rested on the lower die 20 at its ends as shown in Fig. 5a. Then, a hydraulic pressure is fed to a hydraulic cylinder (not shown) for operating the upper die 22, which causes the upper die 22 to be moved toward the lower die 20. The downward movement of the upper die 22 causes the presser member 24 to be engaged with the upper surface of the metal pipe M, so that the bottom end 24-1 is penetrated into the upper surface of the metal pipe M, while the metal pipe M is subjected to a bending about the portion (recess), where the penetration of the lower end 24-1 of the presser member 24 to the metal pipe M is occurred. In this case, at a location of the metal pipe M subjected to the bending, the metal is subjected to the compression on the upper side contacted with the bottom end 24-1 of the presser member 24, while the metal is subjected to an expansion on the lower side faced with the lower die 20, so that a bending of the metal pipe M is proceeded. On the upper surface contacting with the lower end 24-1 of the presser member 24, the compression causes the metal to be excessive, which may cause metal to be piled up. However, thanks to a formation of a recessed portion N as generated by a penetration of the bottom end 24-1 of the presser member 24 to the upper surface of the metal pipe M, the surplus of metal is able to flow into the recessed portion N. As a result of such a flow of the metal into the recessed portion N, the metal is prevented from being piled up. Thus, any wrinkle is prevented from being generated. Furthermore, since the presser member 24 has a rectangular cross-sectional shape extended in the direction of the length of the metal pipe M (Fig. 6), enough area for a surplus of metal generated by the compression is created and the rounded shape of the lower end 24-1 of the presser member 24 allows a smooth flow of the metal to be maintained as the bending proceeds.

Fig. 5b illustrates a condition that the upper die is lowered and the pipe M is contacted with the shaping surface 20-1 of the lower die 20, so that the processing to a bumper reinforce is completed. It is needles to say that the engaged portion N becomes the recess 18 of the bumper reinforce.

According to the present invention, the cross-sectional shape of the presser member 24 is an elongated in the direction of the length of the metal pipe M and the projected shape of the lower end of the presser member 24 is such that located nearer to the center, larger is the extended length toward the metal pipe M. As a result, a smooth flow of the excessive amount of metal toward the recessed portion N on the compressed side of the metal pipe M is obtained as the bending proceeds. Thus, a stable bending process of an increased degree of bending as large as 20 degree is obtained without generating any wrinkle.

Figs. 7 and 8 illustrates a presser member 24a of a modified embodiment. In this embodiment, the presser member 24a has a cross-sectional shape of a rectangular shape as shown in Fig. 8, which is elongated in the direction of the length of the metal pipe as similar to the first embodiment. However, the metal pipe has an angled shape pointed at the center as shown in Fig. 7. It is preferable that the angle satisfies a condition of θ>120°. By such an angled shape, it is also possible that an excessive amount of metal as generated at the compressed side during the bending of the pipe can be flown into a recessed portion as generated by an engagement of the projected portion 24a to the compressed side surface of the pipe, so that a deep bending of an angle larger than 10 degree can be made without generating any wrinkle.

When the bumper reinforce according to the present invention is used form a vehicle body as shown in Fig. 1, the recess 18 can function as a strengthening bead, resulting in an increase in the strength against a collision.

The above embodiments are directed to a bumper reinforce at the front end of a vehicle body. However, the idea of the present invention can also be applied to a bumper reinforce at the rear end of a vehicle body.

### FIELD OF UTILIZATION IN INDUSTRIES

The present invention is utilized for a bumper in front or rear end of a vehicle such as an automobile.

## Claims

1. A bumper reinforce (14) for a vehicle body made of a metal pipe (M) of a rectangular cross-sectional shape and arranged at an end of the vehicle body in a direction of a width of the body, therein said bumper reinforce (14) is formed with bent portions (14-2) and said bumper reinforce (14) is, on its side (14B) subjected to a compression as caused by a bending, formed with recesses (18) having a height h occupying substantial area of the height of the bumper reinforce (14) while leaving portions of the wall thickness at its upper (141) and lower (142) edges to be freed from the recess (18),
**characterized in that** each recess (18) is elongated in the length of the bumper reinforce (14) in such a manner that the length (a) of the recess (18) is longer than the vertical height (L1) of the bumper reinforce (14).

2. A bumper reinforce (14) for a vehicle body according to claim 1, **characterized in that** each recess (18) is formed to such a shape that located nearer the center of the recess in the longitudinal direction, deeper is the depth of the recess (18).

3. A bumper reinforce (14) for a vehicle body according to claim 2, **characterized in that**, when the maximum depth of the recess (18) is d and the width of the bumper reinforce (14) in the vehicle length wise direction is L2, a relationship of d>(1/3)×L2 is obtained.

4. A press bending method in which a metal pipe (M) of a rectangular cross sectional shape is subjected to a bending for obtaining a bumper reinforce (14), wherein the metal pipe (M) is supported at its ends, a presser member (24) of a cross sectional shape having a height (h') almost corresponding to but smaller than the vertical height (L1) of the metal pipe (M) for at least twice of the wall thickness (t) of the metal pipe (M) is arranged so that the presser member (24) is faced with the metal pipe (M), and the presser member (24) and the metal pipe (M) are relatively moved in the direction toward each other in a manner that the presser member (24) is, at its tip end (24-1), penetrated into the opposed surface (14B) of the metal pipe (M), so that a recessed portion (18) is created on one hand and, on the other hand, the metal pipe (M) is subjected to a bending at a location of the metal pipe (M) where the penetration of the presser member (24) to the metal pipe (M) is occurred, the arrangement being such that a surplus of material generated on the side of the metal pipe (M) subjected to the compression during the bending is flown into the recessed portion (18), thereby obtaining an increased bent angle of the bumper reinforce (14) without generating any wrinkle,
**characterized in that** the length (a') of the cross sectional shape of the presser member (24) is larger than the vertical height (L1) of the metal pipe (M) and that the cross sectional shape of the presser member is elongated in the direction of the length of the metal pipe (M).

5. A press bending method according to claim 4, **characterized in that** said presser member (24) is formed such that located nearer to its center in the longitudinal direction of the bumper reinforce (14), larger is the degree of the projection toward the metal pipe (M).

6. A press bending apparatus comprising a lower die (20) having a shaping surface (20-1) corresponding to a bent shape of a bumper reinforce (14) which is, at its central part (14-1), straight shape and, at both ends (14-2), is bent and which is for supporting on the ends a metal pipe (M) of a rectangular cross-sectional shape and includes an upper die (22) arranged above the lower die (20) and having a presser member (24) extending toward the bent part of the lower die (20), while the metal pipe (M) being arranged between the upper (22) and lower (20) dies, wherein the presser member (24) has a cross sectional shape which has a height (h') almost corresponding but smaller than the vertical height (L1) of the metal pipe (M) for at least twice of the wall thickness (t) of the metal pipe (M) and has a side shape which is, at its central part, projected toward the metal pipe (M),
**characterized in that** the length (a') of the cross sectional shape of the presser member (24) is larger than the vertical height (L1) of the metal pipe (M) and the cross sectional shape of the presser member is elongated in the longitudinal direction of the metal pipe (M).

7. A press bending apparatus according to claim 6 **characterized in that** the upper die (22) is provided with a pair of such presser members (24), which are spaced along the longitudinal direction of the metal pipe (M).

8. A press bending apparatus according to claim 6 **characterized in that** said presser member (24) is formed such that located nearer to its center in the longitudinal direction of the bumper reinforce (14), larger is the length of the extension toward the metal pipe (M).

## Patentansprüche

1. Stossfängerverstärkung (14) für eine Fahrzeugkarosserie, die aus einem Metallrohr (M) mit einer rechteckigen Querschnittsform gefertigt ist und an einem Ende der Fahrzeugkarosserie in einer Breitenrichtung der Karosserie angeordnet ist, wobei die Stossfängerverstärkung (14) mit gebogenen Abschnitten (14-2) versehen ist und die Stossfängerverstärkung (14) an ihrer Seite (148), die einer Stauchung unterworfen ist, wie sie durch eine Biegung hervorgerufen wird, mit Einbuchtungen (18) versehen ist, die eine Höhe h aufweisen und einen wesentlichen Bereich der Höhe der Stossfängerverstärkung (14) beanspruchen, während Abschnitte der Wanddicke an ihren oberen (141) und unteren (142) Kanten von der Einbuchtung (18) freigelassen sind,
**dadurch gekennzeichnet, dass** jede Einbuchtung (18) in Längsrichtung der Stossfängerverstärkung (14) langgestreckt ist, derart, dass die Länge (a) der Einbuchtung (18) länger ist als die vertikale Höhe (L1) der Stossfängerverstärkung (14).

2. Stossfängerverstärkung (14) für eine Fahrzeugkarosserie nach Anspruch 1, **dadurch gekennzeichnet, dass** jede Einbuchtung (18) in einer solchen Form ausgebildet ist, dass die Tiefe der Einbuchtung (18) in Längsrichtung zur Mitte der Einbuchtung hin zunimmt.

3. Stossfängerverstärkung (14) für eine Fahrzeugkarosserie nach Anspruch 2, **dadurch gekennzeichnet, dass** dann, wenn die maximale Tiefe der Einbuchtung (18) gleich d ist und die Breite der Stossfängerverstärkung (14) in Fahrzeuglängsrichtung gleich L2 ist, eine Beziehung von d > (1/3) × L2 erhalten wird.

4. Pressbiegeverfahren, bei dem ein Metallrohr (M) mit einer rechteckigen Querschnittsform einem Biegen unterworfen wird, um eine Stossfängerverstärkung (14) zu erhalten, wobei das Metallrohr (M) an seinen Enden unterstützt wird; ein Presselement (24) mit einer Querschnittsform, die eine Höhe (h') nahezu entsprechend der vertikalen Höhe (L1) des Metallrohrs (M), jedoch kleiner als diese, für wenigstens das Doppelte der Wanddicke (t) des Metallrohrs (M) so angeordnet wird, dass das Presselement (24) dem Metallrohr (M) gegenüberliegt, wobei das Presselement (24) und das Metallrohr (M) in einer Richtung gegeneinander relativ bewegt werden, derart, dass das Presselement (24) mit seiner Spitze (24-1) in die gegenüberliegende Oberfläche (14B) des Metallrohrs (M) eindringt, so dass einerseits ein eingebuchteter Abschnitt (18) erzeugt wird und andererseits das Metallrohr (M) an einer Stelle des Metallrohrs (M), wo das Eindringen des Presselements (24) in das Metallrohr (M) stattfindet, einem Biegen unterworfen wird; wobei die Anordnung so beschaffen ist, dass ein Materialüberschuss, der auf der Seite des Metallrohrs (M) erzeugt wird, das während des Biegens der Stauchung unterliegt, in den eingebuchteten Abschnitt (18) fließt, um somit einen erhöhten Biegewinkel der Stossfängerverstärkung (14) ohne Erzeugung irgendwelcher Falten zu erhalten,
**dadurch gekennzeichnet, dass** die Länge (a') der Querschnittsform des Presselements (24) größer ist als die vertikale Höhe (L1) des Metallrohrs (M), und dass die Querschnittsform des Presselements in Längsrichtung des Metallrohrs (M) langgestreckt ist.

5. Pressbiegeverfahren nach Anspruch 4, **dadurch gekennzeichnet, dass** das Presselement (24) so geformt ist, dass in Richtung seiner Mitte in Längsrichtung der Stossfängerverstärkung (14) der Grad des Vorsprungs in Richtung zum Metallrohr (M) zunimmt.

6. Pressbiegevorrichtung, die eine untere Pressform (20) umfasst, die eine Formungsoberfläche (20-1) aufweist, die einer gebogenen Form einer Stossfängerverstärkung (14) entspricht, die in ihrem zentralen Abschnitt (14-1) eine gerade Form aufweist und an beiden Enden (14-2) gebogen ist und dazu dient, an den Enden ein Metallrohr (M) mit einer rechteckigen Querschnittsform zu unterstützen, und eine obere Pressform (22) enthält, die über der unteren Pressform (20) angeordnet ist und ein Presselement (24) aufweist, dass sich in Richtung zum gebogenen Abschnitt der unteren Pressform (20) erstreckt, während das Metallrohr (M) zwischen der oberen (22) und der unteren (20) Pressform angeordnet ist, wobei das Presselement (24) eine Querschnittsform aufweist, die eine Höhe (h') nahezu entsprechend der vertikalen Höhe (L1) des Metallrohrs (M), jedoch kleiner als diese, für wenigstens das Doppelte der Wanddicke (t) des Metallrohrs (M) aufweist und eine Seitenform aufweist, die in ihrem zentralen Abschnitt in Richtung zum Metallrohr (M) hervorsteht,
**dadurch gekennzeichnet, dass** die Länge (a') der Querschnittsform des Presselements (24) größer ist als die vertikale Höhe (L1) des Metallrohrs (M) und die Querschnittsform des Presselements in Längsrichtung des Metallrohrs (M) langgestreckt ist.

7. Pressbiegevorrichtung nach Anspruch 6, **dadurch gekennzeichnet, dass** die obere Pressform (22) mit einem Paar solcher Presselemente (24) versehen ist, die entlang der Längsrichtung des Metallrohrs (M) beabstandet sind.

8. Pressbiegevorrichtung nach Anspruch 6, **dadurch gekennzeichnet, dass** das Presselement (24) so geformt ist, dass in Richtung zu dessen Mitte in Längsrichtung der Stossfängerverstärkung (14) die Länge der Erweiterung in Richtung zum Metallrohr (M) zunimmt.

## Revendications

1. Renfort de pare-chocs (14) pour une caisse de véhicule constitué d'un tuyau métallique (M) de forme en section transversale rectangulaire et agencé à une extrémité de la caisse de véhicule dans une direction de la largeur de la caisse, dans lequel ledit renfort de pare-chocs (14) est formé de parties cintrées (14-2) et ledit renfort de pare-chocs (14) est, sur son côté (14B) soumis à une compression telle que provoquée par un cintrage, formé avec des creux (18) présentant une hauteur (h) occupant une zone substantielle de la hauteur du renfort de pare-chocs (14) tout en laissant les parties de l'épaisseur de paroi au niveau de ses bords supérieur (141) et inférieur (142) exempts de creux (18),
**caractérisé en ce que** chaque creux (18) est allongé dans la longueur du renfort de pare-chocs (14) d'une manière telle que la longueur (a) du creux (18) est plus longue que la hauteur verticale (L1) du renfort de pare-chocs (14).

2. Renfort de pare-chocs (14) pour une caisse de véhicule selon la revendication 1, **caractérisé en ce que** chaque creux (18) est formé en une forme telle que, plus on se situe près du centre du creux dans la direction longitudinale, plus profonde est la profondeur du creux (18).

3. Renfort de pare-chocs (14) pour une caisse de véhicule selon la revendication 2, **caractérisé en ce que**, lorsque la profondeur maximum du creux (18) est d et que la largeur du renfort de pare-chocs (14) dans la direction de la longueur du véhicule est L2, une relation de d > (1/3) × L2 est obtenue.

4. Procédé de cintrage à la presse dans lequel un tuyau métallique (M) de forme en coupe transversale rectangulaire est soumis à un cintrage afin d'obtenir un renfort de pare-chocs (14), où le tuyau métallique (M) est supporté à ses extrémités, un élément presseur (24) dont la forme en section transversale présente une hauteur (h') correspondant pratiquement à la hauteur verticale (L1) du tuyau métallique (M), mais en étant plus petit que celle-ci pour au moins le double de l'épaisseur de paroi (t) du tuyau métallique (M) est agencé de sorte que l'élément presseur (24) fait face au tuyau métallique (M), et l'élément presseur (24) et le tuyau métallique (M) sont déplacés relativement en direction l'un de l'autre d'une manière telle que l'élément presseur (24) est, au niveau de son extrémité de bout (24-1), amené à pénétrer dans la surface opposée (14B) du tuyau métallique (M), de sorte qu'une partie en creux (18) est créée d'une part et que, d'autre part, le tuyau métallique (M) est soumis à un cintrage à un emplacement du tuyau métallique (M) où la pénétration de l'élément presseur (24) dans le tuyau métallique (M) se produit, l'agencement étant tel que le surplus de matériau généré sur le côté du tuyau métallique (M) soumis à la compression au cours du cintrage s'écoule dans la partie en creux (18), en obtenant ainsi un angle de cintrage augmenté du renfort de pare-chocs (14) sans générer de pli,
**caractérisé en ce que** la longueur (a') de la forme en section transversale de l'élément presseur (24) est supérieure à la hauteur verticale (L1) du tuyau métallique (M) et **en ce que** la forme en section transversale de l'élément presseur est allongée dans la direction de la longueur du tuyau métallique (M).

5. Procédé de cintrage à la presse selon la revendication 4, **caractérisé en ce que** ledit élément presseur (24) est formé de sorte que, plus on est situé près de son centre dans la direction longitudinale de l'élément de renfort (14), plus grand est le degré du dépassement en direction du tuyau métallique (M).

6. Dispositif de cintrage à la presse comprenant une matrice inférieure (20) présentant une surface de mise en forme (20-1) correspondant à une forme cintrée du renfort de pare-chocs (14) qui est, au niveau de sa partie centrale (14-1), de forme droite, et qui, au niveau de ses deux extrémités (14-2), est cintrée et qui est destinée à supporter les extrémités d'un tuyau métallique (M) d'une forme en section transversale rectangulaire et comprend une matrice supérieure (22) agencée au-dessus de la matrice inférieure (20) et comportant un élément presseur (24) s'étendant en direction de la partie cintrée de la matrice inférieure (20), le tuyau métallique (M) étant disposé entre les matrices supérieure (22) et inférieure (20), où l'élément presseur (24) présente une forme en section transversale qui a une hauteur (h') correspondant presque à la hauteur verticale (L1) du tuyau métallique (M), mais étant plus petite que celle-ci, pour au moins le double de l'épaisseur de paroi (t) du tuyau métallique (M) et présente une forme latérale qui dépasse, au niveau de sa partie centrale, en direction du tuyau métallique (M),
**caractérisé en ce que** la longueur (a') de la forme en section transversale de l'élément presseur (24) est plus grande que la hauteur verticale (L1) du tuyau métallique (M) et la forme en section transversale de l'élément presseur est allongée dans la direction longitudinale du tuyau métallique (M).

7. Dispositif de cintrage à la presse selon la revendication 6, **caractérisé en ce que** la matrice supérieure (22) est dotée d'une paire de tels éléments presseurs (24), qui sont espacés le long de la direction longitudinale du tuyau métallique (M).

8. Dispositif de cintrage à la presse selon la revendication 6, **caractérisé en ce que** ledit élément presseur (24) est formé de sorte que, plus on est situé près de son centre dans la direction longitudinale du renfort de pare-chocs (14), plus grande est la longueur de l'extension en direction du tuyau métallique (M).
